# EUROPEAN PATENT SPECIFICATION

(11) **EP 3 930 279 B1**
(45) Date of publication and mention of the grant of the patent: **15.02.2023**
(21) Application number: 20181801.0
(22) Date of filing: 23.06.2020
(51) Int. Cl.: H04L 9/40, G06F 21/44

(54) **SECURE MANAGEMENT OF A ROBOTIC PROCESS AUTOMATION ENVIRONMENT**
SICHERE VERWALTUNG EINER ROBOTERPROZESSAUTOMATISIERUNGSUMGEBUNG
GESTION SÉCURISÉE D'UN ENVIRONNEMENT D'AUTOMATISATION DE PROCESSUS ROBOTIQUE

(43) Date of publication of application: 29.12.2021
(73) Proprietor: Robocorp Technologies, Inc., San Francisco, CA 94111 (US)
(72) Inventor: Ahokas, Sampo, 00100 Helsinki (FI); Koskinen, Teppo, 00100 Helsinki (FI); Karjalainen, Antti, 00100 Helsinki (FI); Rajuvaara, Ossi, 00100 Helsinki (FI); Laakso, Timo, 00100 Helsinki (FI)
(74) Representative: Hernandez, Yorck

(56) References cited:
- EP-A2- 3 660 714
- WO-A1-2018/017214
- US-A1- 2019 057 203
- US-B1- 10 623 446

## Description

The present invention is directed towards the secure management of authorization data and automated processing of instructions in a robotic process automation environment, which allows the management of secrets within such a platform. Secrets may be credentials, access rights, passwords, keys or the like. The underlying message flow can be implemented as a computer implemented software protocol in a distributed RPA (robotic process automation) environment. The invention is furthermore directed towards a respectively arranged system arrangement along with a computer program product and a computer-readable medium.

US 2019/0266254 A1 shows a system for processing a request associated with an electronic record, comprising an artificial intelligence orchestration platform, including an artificial intelligence orchestration communication device to receive electronic record, an artificial intelligence orchestration processor coupled to the artificial intelligence orchestration communication device, and an artificial intelligence orchestration storage device.

US 2019/0015974 A1 shows a computing apparatus comprising a third computing platform having a third memory and at least one Robotic Process Automation (RPA) bot stored in the third memory, executable by the third processor and configured to receive an input command from the event case processing management module, perform predetermined robotic tasks in response to the input commands, and return outputs to the event case processing management module in response to performing the predetermined robotic tasks.

US 2019/0303779 A1 shows a system for managing robotic process automation (RPA) software robots (bots) implemented on at least one processor.

Computer implemented agents is a growing research topic involving several fields such as software automation, artificial intelligence, underlying hardware infrastructures as well as parallelization of processing steps and their distribution over a heterogeneous computer network. Robotic process automation (RPA) is a form of process automation based on software robots. Software robots complete the technical processes in a way a person would, only faster and typically with fewer mistakes. This is a technical effect that allows more reliable results.

Some technical processes might require a person to complete several manual operations over a multitude of systems. Often these steps can be described and documented comprehensively in a list of actions to take to complete the process from the beginning to the end. Robotic process automation can be applied to automate those documented actions, for instance, in a way that they can be completed automatically by software robots. Robotic process automation (RPA) may use software robots (bots), also referred to as workers or agents, possibly along with artificial intelligence, for computer implemented process automation.

RPA started out as a business user-focused domain, but as applications of RPA become more high-impact and business-critical, we start to see more developer-oriented tools emerging. With these developer tools, RPA implementation is becoming more of a domain for software robot developers, not as much for casual business users. Software robot developers want to embrace all the best practices of developers, so sharing and reusing code becomes a normal way of working.

As open-source RPA tools mature, software robots become a commodity that every organization is eventually able to use. With this change, the role of the software robot developer will be in high demand, as RPA starts coming available for new kinds of use-cases and broader audiences. Cloud orchestration will be a driver in this development as well since only a handful of users will be willing to invest in operating their own orchestration services, when the same solution can be purchased easily from the cloud.

With widely available RPA developer tools and cloud orchestration, one will see the beginning of the next wave of RPA adoption. Small and medium-sized enterprises will look for ways to incorporate business automation tools but without their own dedicated IT employees. A market need will arise for a new service provider: robotics-as-a-service (RaaS) operator. RaaS operators will claim a segment of the research field, with some operators focusing on specific verticals and others being general automation service providers.

However, as such agents, artificial workers or robots handle sensitive data there is a problem that secrets must be respected and moreover fraudulent access must be prohibited in any case. This is of general interest and needs improved solutions for data access and rights management.

The prior art does not in any case consider such privacy issues or at least an alternative contribution is required. In case several contributions are available attacks are still made more difficult and labor intense as respective entities do not know which protocols are underlying a specific RPA platform. Hence, there is a need to provide additional contributions in the research field of secure process automation, especially in a potentially distributed, heterogeneous hardware environment. Typically interface are at least detectable and so a sophisticated protocol is required which allows the exchange of technical secrets over the network.

Hence, it is an object of the present invention to provide a method and a system arrangement for secure management of authorization data and automated processing of instructions in a robotic process automation environment. Especially such a solution shall respect privacy and consequently access rights management is required. Moreover, it is an object of the present invention to provide a respectively arranged computer program product and a computer-readable medium.

Accordingly, a method for secure management of authorization data and automated processing of instructions in a robotic process automation environment is suggested, comprising transmitting a certificate data item issued by a certificate providing server to an orchestration server and at least one robot entity; linking the at least one robot entity with the orchestration server; transmitting link token data from the certificate providing server to the at least one robot entity; linking the at least one robot entity with a vault server and sending credential data from the vault server to the at least one robot entity upon request by the respective at least one robot entity and using the sent credential data by respectively each of the robot entities to authenticate and authorize each of the respective at least one robot entity at a number of legacy systems to perform tasks assigned to each of the robot entities by the orchestration server after linking.

The invention may use Software Robots and Software Robot Developers especially to describe robots and developers who can use a specific programming language (e.g. Robot Framework and Python) to make more "professional" and demanding technical robots and is accordingly not only for more casual business users. According to an aspect of the present invention casual business users may be excluded. The present invention overcomes the problem that most of existing RPA solutions are local installations, and to use cloud, several clouds and on-premises components make the need for the secret management more important and complex, which poses a further motivation for the present contribution.

The secure management of authorization data involves a very specific sequence of method steps and consequently message flow. While single steps may be known and be arranged according to known scenarios the very specific arrangement of the steps and message flow as currently suggested contributes towards a safe management of secrets such as credentials for the robots. With this specific arrangement along with the suggested hardware components it is made sure that all robot entities receive the required information, especially secret and private key, so they can accomplish their tasks and access legacy systems. A legacy system in this context is any existing implementation which is accessible over a specific interface. In this way the present invention takes advantage from already existing software systems and can access them for accomplishing tasks. In case a file server is to be supported by a robot the legacy system may be such a mail system where the robot receives a task from the orchestration server and uses the file system's interface for acting in correspondence with the posed task.

Typically several robot entities, also referred to as robots, are involved and consequently each robot receives its task, performs the step receiving a certificate, of linking with the orchestration server, receiving a link token data, linking with a vault server and receiving credential data from the vault server upon its request and using the sent credential data to authenticate and authorize itself at a number of legacy systems to perform tasks assigned to the robot. Hence, according to an aspect of the present invention each out of a number of robots performs at least one task assigned by the orchestration server. In preliminary steps each robot entity performs the steps for receiving respective rights from the certificate providing server and the vault server. In case a robot performs several tasks such preliminary steps may be performed once or for each of the tasks to access the required legacy system.

The automated processing of instructions in a robotic process automation environment refers to the segregation of processes into single tasks and assigning them to robot entities according to an aspect of the present invention. The robots receive their task from the orchestration server and access legacy systems if required for accomplishing the tasks. It may be the case that the robots act jointly for accomplishing their tasks in case dependencies are present. Hence, the robots do not only perform their own specific tasks but rather communicate with each other over the network. Hence, they accomplish a process and each robot performs its task or tasks and shares results of one accomplished task with other robots which may rely on such a previously computed result. In this way instructions are processed and the process divided by the orchestration server is performed by the robots. In this way each robot may accomplish at least one task and interact with further robots.

The certificate data may contain information for identification a single robot or a group of robots. The certificate data may for instance comprise a public key which is uniquely assigned to a robot. By transmitting the certificate data the orchestrator server becomes aware of available robots and the robots themselves can present the certificate data to the vault server. Upon receiving the certificate data the orchestration server can link itself with the robot, or respectively several robots. The robots themselves can transmit this certificate data, for instance the public key, to the vault server for triggering further message flow such as the transmission of the link token.

The certificate providing server according to an aspect of the present invention may be used to initialize the process of the suggested method. It is used for establishing certificates and distribution of the certificate data to the orchestration server and to each of the robots. In this way the certificate providing server introduces robot entities into the system or at least initializes robots to be introduced into the system as they are provided with the certificate data. The certificate data may be required for entering the system meaning to receive tasks from the orchestration server and to take part in the communication with the vault server according to further method steps.

Any communication in the suggest method and arrangement can be performed using further security mechanisms such as encryption or the like. Moreover, secured channels and additional hardware components may be applied for securing the data and its communication across the overall environment.

The orchestration server stores process models or generally instructions for accomplishing a specific process. The process as a whole can be treated as a task to be accomplished by a robot or the process can be broken down into single tasks which can then be performed by a number of robots. In this way the process or issue to be performed can by assigned to several robots which jointly perform required steps. The orchestration server is aware of available robots as they are linked with the orchestration server. Hence, it is known how many robots are available and especially which capacities and resources they offer. The orchestration may assign each robot the task that is most appropriate in terms of efficient handling.

The at least one robot entity may be one single entity or a group of robots which work independently from each other. This does not mean that they do not share information but rather the act together for solving the overall process or issue. Hence dependencies are considered and once a first task is finished resulting knowledge may be shared amongst the robots for accomplishing a second task. The robots are able the separately perform the suggested method steps such that each robot acquires the respective information such as credentials and access information for accomplishing the task. The method steps may likewise be performed for the whole group such that the group obtains the required certificates and credential data.

The linking of the at least one robot entity with the orchestration server may involve steps such as setting up a communication session over a communication channel. Linking means that the robot or the robots are made known to the orchestration server and vice versa. Hence, the orchestration server is aware of the robots and knows how to communicate with them. The orchestration server may hold a database including process or receive such processes using an interface.

The link token data from the certificate providing server enables the at least one robot to use the secrets from the vault server. Then link token may contain an address of the vault server so the worker or robot is able to link and connect with the vault server. Upon reception of the link token data the vault server knows according to an aspect of the present invention that the robot is allowed to access secrets and under which circumstances. For instance the link token data may contain specific rights so the vault server can provide respective secrets.

The credential data from the vault server may provide secrets required for gaining access to the at least one legacy system, amongst others. In this way a trusted infrastructure is used to provide access data for legacy systems. According to the suggested method and arrangement it is of special advantage that the certificate and the link token data is provided by a first instance namely the certificate providing server and the credential data, for instance the private key, is provided by a second instance namely the vault server. In general a legacy system may be any IT system.

According to a further aspect of the present invention the credential data is enhanced, when a multi-factor authentication is used. One even further aspect of this is the 2-factor authentication, i.e. a password is not enough, but the user also needs a code in addition to that is sent (e.g. using SMS, email or any further transmission format) or generated by a security device or application, for instance a QR code.

Secrets and credential data may also include these additional factors. It may be so that Vault Server takes care of the second factor too. A couple of implementation models and aspects of the present invention are presented in the following:
1) If the second factor is sent by SMS or email, then the Worker, namely the robot entity that is in the authentication phase, requests to send the code. In the system settings the contact number or email address is directed to the Vault Server. The worker then sends a message to the Vault Server that it expects a security code. When the Vault Server gets it, it then sends it to the Worker that can use it in the authentication (e.g. login) process.
2) The Vault Server can include an application to generate secret codes (i.e. second factor). In this case the secret generation application may be initiated with a common secret. This can mean e.g. a QR code that is used once when the generator is setup. The Vault Server may have functionality to read those setup codes (e.g. QR code). It can be a mobile app or a special robot that can read the setup code and give it to the Vault Server. When the generator has been set up, then the Worker can request a secret code from it. It is similar as password but the code is different each time, and sometimes the generation can also include input. In this case the Worker may e.g. read an input number from the screen, send it to the Vault Server, and the Vault Server uses the number as an input to the generator to get a right secret code for this session.

Hence, the present invention allows requesting valid 2-factor codes for use in RPA activities. Further aspects of this procedure are provided in the following.

A service or application may prompt the user to enable 2-factor authentication and presents a QR code for importing into their authenticator application. The user may import this data into the Vault Server. This can happen either through copy-pasting the text representation or by allowing the Vault Server to read QR codes. The user would then be able to request time-based passwords through an API, from a user interface view, or by calling keywords from a RPA Framework library.

From the QR code the underlying method or arrangement will receive at minimum the shared secret, which will be used for generating future passwords. It can also receive metadata such as account name, digit counts, hashing methods and/ or validity times.

This shared secret can be stored and be encrypted, and only be unencrypted when a new password is requested. The optional metadata may also be used during this phase. The shared secret and current time are inserted into a Time-based One-time Password Algorithm generator method, which generates a new (currently) valid password.

APIs according to the present invention may only expose the available aliases for code generation, the resulting password when requested, and/ or potentially some relevant metadata. The shared secret may not be visible to API users.

As an extension to existing secret handling libraries, a keyword for requesting valid Time-based One-time Password passwords may be added. Further input may be the previously user-defined alias for it, and the output will be at minimum the generated password. It could also return a subset of the QR code's metadata for the account name. The Time-based One-time Password may be valid for instance for 30 seconds.

The generated codes may only be valid for a short period of time, and a potential attacker would need to have active access to the Vault Server. Passwords on the other hand may be static.

In general any server according to the present invention may be implemented as a software service or a physical server entity.

The vault server can generally install specialized security mechanisms and can be implemented as a trusted server. Hence, special security features can prevent that the provided secrets such as credential data is stolen from the server. The vault server communicates with every robot being in charge of accomplishing tasks.

Sending credential data from the vault server to the at least one robot entity upon request by the respective at least one robot entity implies that the robot asks for specific rights and after checking if the robot is allowed to receive such rights they are coded in the credential data for the robot. Such rights may be assigned to a single robot or a group of robots.

Using the sent credential data by respectively each of the robot entities to authenticate and authorize each of the respective at least one robot entity at a number of legacy systems involves that the robots log in to the required legacy systems so they are ready to perform their tasks. Hence, the credential information may contain access data to be presented to the legacy system. One robot may use one or several legacy system or the group of robots may use one or several legacy systems. The usage scenario may depend on the overall process and the specific tasks provided by the orchestration server.

After these steps the robot or robots perform tasks assigned to each of them by the orchestration server after linking. These steps may be performed using any number of legacy systems. A first legacy system may be an e-mail program while a second system may be costumer data base. Consequently, the robots may act together and automatically reply to any e-mail sent by a customer. In case the sender is not in the data base the mail may be forwarded to a further robot. Hence, the overall process can be named answering mails, while tasks include the handling and operating of the mail program and a further task may be the look-up in a data base, for example.

Some examples of possible activities or tasks involved in a typical business process are inputting information from data source A to system B, processing forms (which can include multiple data sources), sending information via email or SMS, archiving data, moving data between systems and/ or using systems with no application programming interfaces (APIs) via a user interface (e.g., mainframe computers).

According to an aspect of the present invention the certificate data item comprises a public key for authentication of the at least one robot entity. This provides the advantage that the robot can identify itself at the orchestration service and the robot is uniquely identifiable.

According to a further aspect of the present invention linking the at least one robot entity with the orchestration server comprises setting up a communication session. This provides the advantage that both entities namely the server and the robot can exchange data such as the tasks assigned to the robot. In this way the orchestration server can instruct the robots at any time and the connection does not have to be setup again for each task.

According to a further aspect of the present invention the link token data specifies rights valid for at least one robot entity to access the vault server, an expiration date, a vault server address and/ or access rights. This provides the advantage that the robot obtains rights to receive secret information and that further restrictions can be implemented. For instance a time limit may be specified. After the expiry of the link token data the vault server is no longer available for the robot. The robot may also be provided with rights which restrict not only the access to the vault server but the vault server may likewise use this data to grant specific access rights for a legacy system to robot intends to use.

According to an aspect of the present invention the vault server provides a secured and trusted environment comprising a key management infrastructure. This provides the advantage that this instance can be protected in a very secure way and that this server is independent from further servers. The invention identifies that is of special interest in the present context. According to the suggested teachings the data is distributed over the network and protected such that an intruder needs to attack several instances.

According to a further aspect of the present invention the credential data comprises a private key for authentication and authorization of the at least one robot entity at the at least one legacy system, an authentication secret, an authorization secret, a password and/ or access data. This provides the advantage that the robot can access legacy systems using these tickets and hence the access can be controlled by the vault server.

According to a further aspect of the present invention the orchestration server divides a process to be accomplished into single tasks and assigns them to the at least one robot entity for its accomplishment. This provides the advantage that the orchestration can perform technical process management apart from authentication and authorization data. Hence, the logic is divided and changes regarding one server may not affect the other one.

According to a further aspect of the present invention the legacy systems are accessed by the at least one robot entity using predefined interfaces. This provides the advantage that any legacy system can be integrated without further ado and hence the robots can accomplish a huge variety of tasks.

According to an aspect of the present invention the at least one robot entity is deployed remotely from the orchestration server, the certificate providing server and/ or the vault server. This provides the advantage that robot entities can be installed at premise and no reorganization is required. The robots are deployed locally the system is distributed at least for security reasons.

According to a further aspect of the present invention the orchestration server, the certificate providing server and/ or the vault server are operated in a cloud server. This provides the advantage that they can be operated separately as server processes but still can be run on a single machine or environment. This provides both scalability and security. Hence, the suggested method and arrangement can be provided as a single service.

According to a further aspect of the present invention the at least one robot entity comprises a software agent, a set of control instructions, a physical robot, a software robot and/ or an autonomous artificial intelligence agent. This provides the advantage that a heterogeneous environment of robots can be integrated and can be operated seamlessly. They all can jointly act together towards accomplishing the overall process.

According to a further aspect of the present invention the method is implemented as a software protocol in a distributed environment. This provides the advantage that the method and the arrangement can be deployed in an easy way and can moreover be integrated in an existing environment.

The object is also solved by a system arrangement for secure management of authorization data and automated processing of instructions in a robotic process automation environment, comprising a certificate providing server arranged to transmit a certificate data item issued by the certificate providing server to an orchestration server and at least one robot entity; an interface unit arranged to link the at least one robot entity with the orchestration server; a further interface unit arranged to transmit link token data from the certificate providing server to the at least one robot entity; a communication unit arranged to link the at least one robot entity with a vault server and send credential data from the vault server to the at least one robot entity upon request by the respective at least one robot entity; and an authorization unit arranged to use the sent credential data by respectively each of the robot entities to authenticate and authorize each of the respective at least one robot entity at a number of legacy systems to perform tasks assigned to each of the robot entities by the orchestration server after linking.

The object is also solved by a computer program product comprising instructions to cause the arrangement to execute the steps of the method as well by a computer-readable medium having stored thereon the computer program.

It is of special advantage that the method as suggested above can be executed using structural features of the suggested system arrangement. Accordingly the method teaches steps which are arranged to operate the suggested arrangement. Furthermore, the arrangement comprises structural features allowing the accomplishment of the suggested method. In addition a computer program and a computer program product respectively is suggested comprising instruction which perform the suggested method when executed on a computer or the arrangement according to the present invention. Furthermore, the instructions provide means for implementing the structural features of the claimed arrangement. Accordingly an operable image of the structural features of the device can be created. Likewise an arrangement comprising the structural device features is provided.

The invention will now be described merely by way of illustration with reference to the accompanying drawings:
- Figure 1: shows a message flow diagram for secure management of authorization data and automated processing of instructions in a robotic process automation environment according to an aspect of the present invention; and
- Figure 2: shows a further message flow and organization diagram in a robotic process automation environment according to an aspect of the present invention.

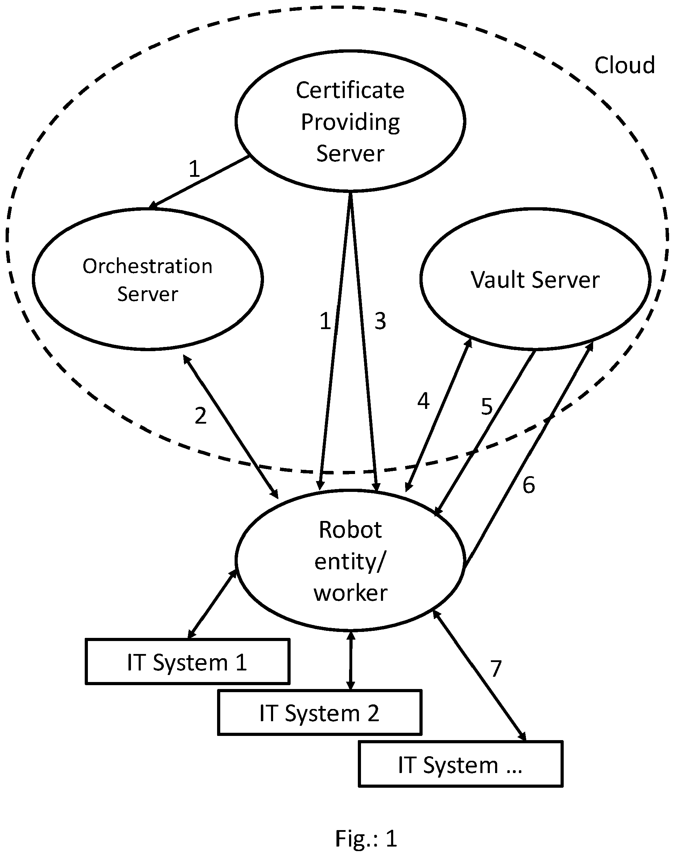

Figure 1 shows a method for secure management of authorization data and automated processing of instructions in a robotic process automation environment, comprising transmitting 1 a certificate data item issued by a certificate providing server to an orchestration server and at least one robot entity; linking 2 the at least one robot entity with the orchestration server; transmitting 3 link token data from the certificate providing server to the at least one robot entity; linking 4 the at least one robot entity with a vault server and sending 6 credential data from the vault server to the at least one robot entity upon request 5 by the respective at least one robot entity and using 7 the sent credential data by respectively each of the robot entities to authenticate and authorize each of the respective at least one robot entity at a number of legacy systems, namely IT systems 1, 2, ..., to perform tasks assigned to each of the robot entities by the orchestration server after linking 2.

The person skilled in the art recognizes that the aforementioned method steps can be performed iteratively or, optionally, in a different order.

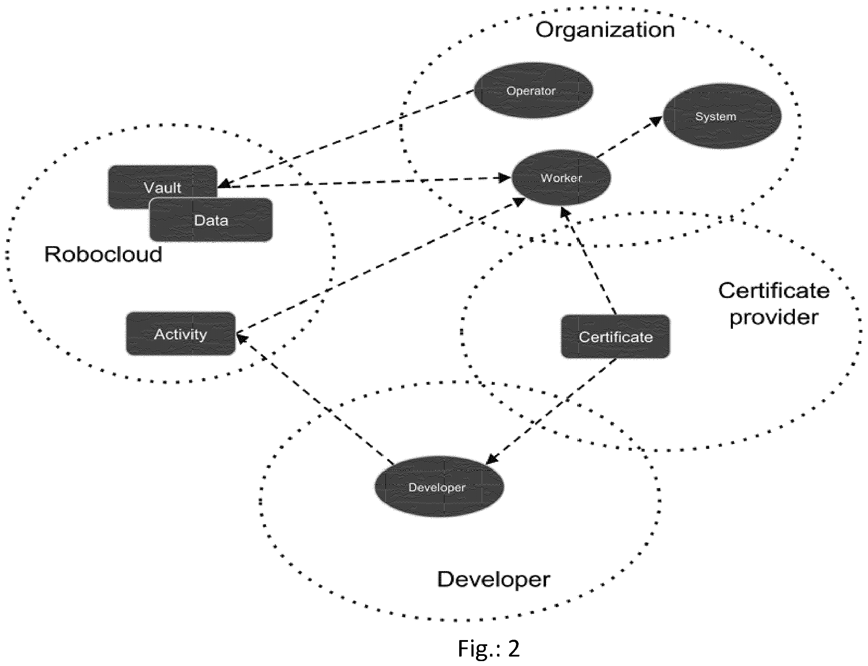

Figure 2 shows the suggested arrangement according to an aspect of the present invention. Compared to figure 1 a developer is introduced which designs activities to be stored as a process by the orchestration server. To do so the developer may likewise require a certificate.

In the following issues of secrets management in the suggested environment are provided, such as the model and the concept to manage secrets management in RPA and software robot implementations according to an aspect of the present invention. The organization describes the holder of the legacy system or systems on which the worker, robot or software agent works. The cloud introduced by the dotted circle on the left side may combine the vault server and the orchestration server in one single cloud.

RPA and Software Robot implementations according to an aspect of the present invention may have credentials to log in or get a permission to execute actions in IT systems. This creates fundamental security requirements to avoid misused of these credentials.

This invention consists of a process and technical solutions amongst others to manage needed secrets and use them in a secure way.

The solution according to an aspect of the present invention may consist of at least the following features:
1. Cloud based orchestration service, Orchestrator, that control software agents,
2. Software agents, Workers, that are installed locally,
3. Data storage, Vault, where secrets are encrypted, and/ or
4. Certificate Provider that issues a Worker a unique certificate to run an operation.

When a Worker is created according to an aspect of the present invention, it gets a certificate and link token. With the certificate it can create its private and public keys. With the link token the Worker can link itself to the Orchestrator to execute tasks and in the linking process to change information to identify each other with their public and private keys.

The Certificate Provider issues the Worker rights to use the secrets (credentials), when the Orchestrator gives it a task that requires credentials. This happens according to an aspect of the present invention by providing an access token to the Worker. This token includes a link to use the Vault with a limited time (time needed by the Worker to execute the task). After this:
1. The Vault identifies that the request comes to the genuine Worked based on an authentic access token and (optional) private-public keys of the Vault and Worker.
2. The request includes parameters to know, which Secrets are needed by the Worker. The Vault checks the Worker has rights to get those Secrets.
3. The Vault sends the needed Secrets to the Worker over an encrypted connection and optionally the Secrets can be encrypted also on the application layer by the private-public keys of Vault and Worker.
4. The Worker is able to open the encryption with its private key.
5. The Worker uses the credentials as needed and/ or
6. Vault collects an audit log from all Secret requests.

The underlying message flow can be implemented as a computer implemented software protocol in a distributed RPA (robotic process automation) environment. The suggested method and the arrangement can be implemented as a robotics-as-a-service (RaaS) system.

Use cases may include some legacy systems. Software robots can be used to automate more demanding tasks, including machine learning and artificial intelligence, and it still need some secrets and credentials to use other systems, although it is not always login name and password type sequences, but something similar that are needed e.g. to use API and get data.

The terms "legacy system" and "system used" can, according to an aspect of the present invention be used interchangeably. The same holds true for the terms "Robot Entity" (see figure 1) and "Worker" (see figure 2) which can likewise be used interchangeably. Consequently a robot and worker may be represented by the same entity. The Link Token can likewise be referred to as a (Vault) Access Token.

CLAIMS

## Claims

1. A method for secure management of authorization data and automated processing of instructions in a robotic process automation environment, comprising:
- transmitting (1) a certificate data item issued by a certificate providing server to an orchestration server and at least one robot entity;
- linking (2) by the orchestration server with at least the one robot entity upon reception of the certificate data item;
- transmitting (3) link token data from the certificate providing server to the at least one robot entity;
- linking (4) using the link token data the the at least one robot entity with a vault server and sending (6) credential data from the vault server to the at least one robot entity upon request (5) by the respective at least one robot entity; and
- using (7) the sent credential data by respectively each robot entity to authenticate and authorize each of the respective at least one robot entity at a number of legacy systems to perform tasks assigned to each of the robot entities by the orchestration server after linking (2).

2. The method of claim 1, **characterized in that** the certificate data item comprises a public key for authentication of the at least one robot entity.

3. The method of claim 1 or 2, **characterized in that** linking (2) the at least one robot entity with the orchestration server comprises setting up a communication session.

4. The method of any one of the preceding claims, **characterized in that** the link token data specifies rights valid for at least one robot entity to access the vault server, an expiration date, a vault server address and/ or access rights.

5. The method of any one of the preceding claims, **characterized in that** the vault server provides a secured and trusted environment comprising a key management infrastructure.

6. The method of any one of the preceding claims, **characterized in that** the credential data comprises a private key for authentication and authorization of the at least one robot entity at the at least one legacy system, an authentication secret, an authorization secret, a password and/ or access data.

7. The method of any one of the preceding claims, **characterized in that** the orchestration server divides a process to be accomplished into single tasks and assigns them to the at least one robot entity for its accomplishment.

8. The method of any one of the preceding claims, **characterized in that** the legacy systems are accessed by the at least one robot entity using predefined interfaces.

9. The method of any one of the preceding claims, **characterized in that** the at least one robot entity is deployed remotely from the orchestration server, the certificate providing server and/ or the vault server.

10. The method of any one of the preceding claims, **characterized in that** the orchestration server, the certificate providing server and/ or the vault server are operated in a cloud server.

11. The method of any one of the preceding claims, **characterized in that** the at least one robot entity comprises a software agent, a set of control instructions, a physical robot, a software robot and/ or an autonomous artificial intelligence agent.

12. The method of any one of the preceding claims, **characterized in that** the method is implemented as a software protocol in a distributed environment.

13. A system arrangement for secure management of authorization data and automated processing of instructions in a robotic process automation environment, comprising:
- a certificate providing server arranged to transmit (1) a certificate data item issued by the certificate providing server to an orchestration server and at least one robot entity;
- an interface unit arranged to link by the orchestration server with at least the one robot entity upon reception of the certificate data item;
- a further interface unit arranged to transmit (3) link token data from the certificate providing server to the at least one robot entity;
- a communication unit arranged to link (4) using the link token data the at least one robot entity with a vault server and send (6) credential data from the vault server to the at least one robot entity upon request (5) by the respective at least one robot entity; and
- an authorization unit arranged to use (7) the sent credential data by respectively each robot entity to authenticate and authorize each of the respective at least one robot entity at a number of legacy systems to perform tasks assigned to each of the robot entities by the orchestration server after linking (2).

14. A computer program product comprising instructions to cause the arrangement of claim 13 to execute the steps of the method of any one of claims 1 to 12.

15. A computer-readable medium having stored thereon the computer program of claim 14.

## Patentansprüche

1. Verfahren zum sicheren Management von Autorisierungsdaten und automatisiertem Verarbeiten von Anweisungen in einer Umgebung zur Roboterprozessautomatisierung, umfassend:
- Übertragen (1) eines Zertifikatdatenelements, das von einem Zertifikatbereitstellungs-Server ausgestellt wird, an einen Orchestrierungs-Server und mindestens eine Robotereinheit;
- Verbinden (2) durch den Orchestrierungs-Server mit mindestens der einen Robotereinheit bei Empfang des Zertifikatdatenelements,
- Übertragen (3) von Verbindungs-Token-Daten von dem Zertifikatbereitstellungs-Server an die mindestens eine Robotereinheit;
- Verbinden (4) der mindestens einen Robotereinheit mit einem Tresor-Server unter Verwendung der Verbindungs-Token-Daten und Senden (6) von Anmeldedaten von dem Tresor-Server an die mindestens eine Robotereinheit auf Anforderung (5) durch die jeweilige mindestens eine Robotereinheit; und
- Verwenden (7) der gesendeten Anmeldedaten durch jede Robotereinheit, um jede der jeweiligen mindestens einen Robotereinheit bei einer Anzahl von Altsystemen zu authentifizieren und zu autorisieren, Aufgaben auszuführen, die nach Verbindung (2) durch den Orchestrierungs-Server jeder der Robotereinheiten zugewiesen werden.

2. Verfahren nach Anspruch 1, **dadurch gekennzeichnet, dass** das Zertifikatdatenelement einen öffentlichen Schlüssel zur Authentifizierung der mindestens einen Robotereinheit umfassen.

3. Verfahren nach Anspruch 1 oder 2, **dadurch gekennzeichnet, dass** das Verbinden (2) der mindestens einen Robotereinheit mit dem Orchestrierungs-Server ein Aufbauen einer Kommunikationssitzung umfasst.

4. Verfahren nach einem der vorherigen Ansprüche, **dadurch gekennzeichnet, dass** die Verbindungs-Token-Daten Rechte, die für mindestens eine Robotereinheit gültig sind, um auf den Tresor-Server zuzugreifen, ein Ablaufdatum, eine Tresor-Server-Adresse und/oder Zugriffsrechte spezifizieren.

5. Verfahren nach einem der vorherigen Ansprüche, **dadurch gekennzeichnet, dass** der Tresor-Server eine sichere und vertrauenswürdige Umgebung bereitstellt, umfassend eine Schlüsselmanagement-Infrastruktur.

6. Verfahren nach einem der vorherigen Ansprüche, **dadurch gekennzeichnet, dass** die Anmeldedaten einen privaten Schlüssel zur Authentifizierung und Autorisierung der mindestens einen Robotereinheit an dem mindestens einen Altsystem, ein Authentifizierungsgeheimnis, ein Autorisierungsgeheimnis, ein Passwort und/oder Zugangsdaten umfassen.

7. Verfahren nach einem der vorherigen Ansprüche, **dadurch gekennzeichnet, dass** der Orchestrierungs-Server einen auszuführenden Prozess in einzelne Aufgaben unterteilt und diese der mindestens einen Robotereinheit zur Ausführung zuweist.

8. Verfahren nach einem der vorherigen Ansprüche, **dadurch gekennzeichnet, dass** der Zugriff auf die Altsysteme durch die mindestens eine Robotereinheit über vordefinierte Schnittstellen erfolgt.

9. Verfahren nach einem der vorherigen Ansprüche, **dadurch gekennzeichnet, dass** die mindestens eine Robotereinheit entfernt von dem Orchestrierungs-Server, dem Zertifikatbereitstellungs-Server und/oder dem Tresor-Server eingesetzt wird.

10. Verfahren nach einem der vorherigen Ansprüche, **dadurch gekennzeichnet, dass** der Orchestrierungs-Server, der Zertifikatbereitstellungs-Server und/oder der Tresor-Server in einem Cloud-Server betrieben werden.

11. Verfahren nach einem der vorherigen Ansprüche, **dadurch gekennzeichnet, dass** die mindestens eine Robotereinheit einen Software-Agenten, einen Satz von Steueranweisungen, einen physischen Roboter, einen Software-Roboter und/oder einen autonomen Agenten mit künstlicher Intelligenz umfasst.

12. Verfahren nach einem der vorherigen Ansprüche, **dadurch gekennzeichnet, dass** das Verfahren als Softwareprotokoll in einer verteilten Umgebung implementiert ist.

13. Systemanordnung zum sicheren Management von Autorisierungsdaten und automatisiertem Verarbeiten von Anweisungen in einer Umgebung zur Roboterprozessautomatisierung, umfassend:
- einen Zertifikatbereitstellungs-Server, der angeordnet ist, um ein von der Zertifikatbereitstellungs-Server ausgestelltes Zertifikatdatenelement an einen Orchestrierungs-Server und mindestens eine Robotereinheit zu übertragen (1);
- eine Schnittstelleneinheit, die angeordnet ist, um bei Empfang des Zertifikatdatenelements durch den Orchestrierungs-Server mit mindestens der einen Robotereinheit eine Verbindung herzustellen;
- eine weitere Schnittstelleneinheit, die angeordnet ist, um Verbindungs-Token-Daten von dem Zertifikatbereitstellungs-Server an die mindestens eine Robotereinheit zu übertragen (3);
- eine Kommunikationseinheit, die angeordnet ist, um unter Verwendung der Verbindungs-Token-Daten die mindestens eine Robotereinheit mit einem Tresor-Server zu verbinden (4) und um Anmeldedaten von dem Tresor-Server an die mindestens eine Robotereinheit auf Anforderung (5) durch die jeweilige mindestens eine Robotereinheit zu senden (6); und
- eine Autorisierungseinheit, die angeordnet ist, um die gesendeten Anmeldedaten durch jeweils jede Robotereinheit zu verwenden (7), um jede der jeweiligen mindestens einen Robotereinheit bei einer Anzahl von Altsystemen zu authentifizieren und zu autorisieren, um Aufgaben auszuführen, die nach dem Verbinden (2) durch den Orchestrierungs-Server jeder der Robotereinheiten zugewiesen werden.

14. Computerprogrammprodukt, umfassend Anweisungen, um die Anordnung nach Anspruch 13 zu veranlassen, die Schritte des Verfahrens nach einem der Ansprüche 1 bis 12 auszuführen.

15. Computerlesbares Medium, auf dem das Computerprogramm nach Anspruch 14 gespeichert ist.

## Revendications

1. Procédé permettant la gestion sécurisée des données d'autorisation et de traitement automatisé d'instructions dans un environnement d'automatisation de processus robotique, comprenant :
- la transmission (1) d'un élément de données de certificat délivré par un serveur de fourniture de certificat à un serveur d'orchestration et à au moins une entité robotisée ;
- la mise en relation (2) par le serveur d'orchestration avec au moins
une entité robotisée lors de la réception de l'élément de données de certificat ;
- la transmission (3) des données de jeton de liaison du serveur de fourniture de certificat à la au moins une entité robotisée ;
- la mise en relation (4) à l'aide des données de jeton de liaison
de la au moins une entité robotisée avec un serveur coffre-fort et l'envoi
(6) des données de justificatif d'identité du serveur coffre-fort à la au moins une entité robotisée lors de la demande (5) par la au moins une entité robotisée respective ; et
- l'utilisation (7) des données de justificatif d'identité envoyées respectivement par chaque entité robotisée pour authentifier et autoriser chacune de l'au moins une entité robotisée respective au niveau d'un nombre de systèmes hérités pour réaliser des tâches attribuées à chacune des entités robotisées par le serveur d'orchestration après la mise en relation (2).

2. Procédé selon la revendication 1, **caractérisé en ce que** l'élément de données de certificat comprend une clé publique pour l'authentification de la au moins une entité robotisée.

3. Procédé selon la revendication 1 ou 2, **caractérisé en ce que** la mise en relation (2) de la au moins une entité robotisée avec le serveur d'orchestration comprend l'établissement d'une session de communication.

4. Procédé selon l'une quelconque des revendications précédentes, **caractérisé en ce que** les données de jeton de lien spécifient des droits valables pour au moins une entité robotisée pour accéder au serveur coffre-fort, une date d'expiration, une adresse de serveur coffre-fort et/ou des droits d'accès.

5. Procédé selon l'une quelconque des revendications précédentes, **caractérisé en ce que** le serveur coffre-fort fournit un environnement sécurisé et de confiance comprenant une infrastructure de gestion de clés.

6. Procédé selon l'une quelconque des revendications précédentes, **caractérisé en ce que** les données de justificatif d'identité comprennent une clé privée pour l'authentification et l'autorisation de la au moins une entité robotisée au niveau du au moins un système hérité, un secret d'authentification, un secret d'autorisation, un mot de passe et/ou des données d'accès.

7. Procédé selon l'une quelconque des revendications précédentes, **caractérisé en ce que** le serveur d'orchestration divise un processus à accomplir en tâches uniques et les attribue à la au moins une entité robotisée pour son accomplissement.

8. Procédé selon l'une quelconque des revendications précédentes, **caractérisé en ce que** les systèmes hérités sont accessibles par la au moins une entité robotisée à l'aide d'interfaces prédéfinies.

9. Procédé selon l'une quelconque des revendications précédentes, **caractérisé en ce que** la au moins une entité robotisée est déployée à distance à partir du serveur d'orchestration, du serveur de fourniture de certificat et/ou du serveur coffre-fort.

10. Procédé selon l'une quelconque des revendications précédentes, **caractérisé en ce que** le serveur d'orchestration, le serveur de fourniture de certificat et/ou le serveur coffre-fort sont exploités dans un serveur en nuage.

11. Procédé selon l'une quelconque des revendications précédentes, **caractérisé en ce que** la au moins une entité robotisée comprend un agent logiciel, un ensemble d'instructions de commande, un robot physique, un robot logiciel et/ou un agent d'intelligence artificielle autonome.

12. Procédé selon l'une quelconque des revendications précédentes, **caractérisé en ce que** le procédé est mis en oeuvre sous la forme d'un protocole logiciel dans un environnement distribué.

13. Agencement de système destiné à la gestion sécurisée de données d'autorisation et le traitement automatisé d'instructions dans un environnement d'automatisation de processus robotique, comprenant :
- un serveur de fourniture de certificat agencé pour transmettre (1) un élément de données de certificat délivré par le serveur de fourniture de certificat à un serveur d'orchestration et au moins une entité robotisée ;
- une unité d'interface agencée pour être mise en relation par le serveur d'orchestration avec au moins l'entité robotisée lors de la réception de l'élément de données de certificat ;
- une unité d'interface supplémentaire agencée pour transmettre (3) des données de jeton de lien du serveur de fourniture de certificat à la au moins une entité robotisée ;
- une unité de communication agencée pour mettre en relation (4) à l'aide des données de jeton de liaison la au moins une entité robotisée
avec un serveur coffre-fort et envoyer (6) des données de justificatif d'identité du serveur coffre-fort à la au moins une entité robotisée lors de la demande (5) par la au moins une entité robotisée respective ; et
- une unité d'autorisation agencée pour utiliser (7) les données de justificatif d'identité envoyées respectivement par chaque entité robotisée pour authentifier et autoriser chacune de la au moins une entité robotisée respective au niveau d'un nombre de systèmes hérités pour réaliser des tâches attribuées à chacune des entités robotisées par le serveur d'orchestration après la mise en relation (2).

14. Produit-programme informatique comprenant des instructions pour amener l'agencement de la revendication 13 à exécuter les étapes du procédé de l'une quelconque des revendications 1 à 12.

15. Support lisible par ordinateur possédant stocké sur celui-ci le programme informatique selon la revendication 14.
